# EUROPÄISCHE PATENTANMELDUNG

(11) **EP 1 157 883 A2**
(43) Veröffentlichungstag der Anmeldung: **28.11.2001**
(21) Anmeldenummer: 01112506.9
(22) Anmeldetag: 23.05.2001
(51) Int. Cl.: B60N 2/46

(54) **Armlehne**

(30) Priorität: 23.05.2000 DE 10025396
(71) Anmelder: Isringhausen GmbH & Co. KG, 32657 Lemgo (DE)
(72) Erfinder: Von der Heide, Thomas, 32657 Lemgo (DE)
(74) Vertreter: Schnekenbühl, Robert Matthias L.

(57) **Zusammenfassung**

Die Erfindung befaßt sich mit einer Armlehne insbesondere für einen Gabelstaplersitz. Das Problem, eine Armlehne so auszugestalten, daß bei einer Überlastung keine Beschädigung des Sitzteiles, der Armlehnenlagerung oder der Armlehne selbst erfolgt, wird durch eine Armlehne gelöst mit einem mit der Armlehne (1) fest verbundenen Grundkörper (2), einem fest dem Sitz zugeordneten Verriegelungskörper (3) und einem Sperrkörper (4), wobei Grundkörper (2), Verriegelungskörper (3) und Sperrkörper (4) konzentrisch um eine fest am Sitz montierte Welle (6) angeordnet sind, der Grundkörper (2) eine erste Reibungseinrichtung (7) und der Verriegelungskörper (3) eine zweite Reibungseinrichtung (8) aufweist, die beiden Reibungseinrichtungen (7, 8) konzentrisch zur Welle (6) in radialer Richtung in Kontakt sind und der Sperrkörper (4) eine der beiden Reibungseinrichtungen (7, 8) so in radialer Richtung unterstützt, dass bei Überlast die beiden Reibungseinrichtungen (7, 8) gegeneinander verdrehbar sind.

## Beschreibung

Die Erfindung betrifft eine Armlehne, insbesondere eine Armlehne für einen Gabelstaplersitz.

Bekannt sind schwenkbare Armlehnen, die einen Anschlag für die Schwenkbewegung nach unten aufweisen. Bei einer sehr hohen Last auf der Armlehne kann durch den starren Anschlag eine Beschädigung des Sitzteiles, der Armlehnenlagerung oder der Armlehne selbst erfolgen.

Der vorliegenden Erfindung liegt das Problem zu Grunde, eine Armlehne so auszugestalten, daß bei einer Überlastung keine Beschädigung des Sitzteiles, der Armlehnenlagerung oder der Armlehne selbst erfolgt.

Dieses Problem wird durch eine Armlehne nach Patentanspruch 1 gelöst. Durch die Unterstützung des Sperrkörpers der ersten oder zweiten Reibungseinrichtung in radialer Richtung wird die Reibungskraft zwischen den beiden Reibungseinrichtungen stark erhöht. Dadurch widersteht die Armlehne einer Belastung mit einer Kraft, die ein Drehmoment in Drehrichtung der gegeneinander verdrehbaren Teile der Reibungseinrichtung (im folgenden azimutale Belastung genannt) hervorruft. Übersteigt die auf die Armlehne einwirkende Kraft jedoch einen Grenzwert, so reicht die zwischen den beiden Reibungseinrichtungen wirkende Reibungskraft nicht mehr aus, um den Grundkörper gegenüber dem Verriegelungskörper in seiner Stellung zu halten. Der Grundkörper der Armlehne weicht dieser Kraft aus und dreht sich weg. Dabei verkürzt sich der auf die Lagerung wirksame Hebelarm, so dass die in die Sitzstruktur einzuleitenden Kräfte begrenzt sind. Somit wird sicher gewährleistet, daß es zu keiner Beschädigung kommt.

Eine vorteilhafte Weiterbildung der Erfindung sieht vor, daß der Sperrkörper mittels einer Umschaltvorrichtung zwischen einer ersten Position, in der er die erste oder zweite Reibungseinrichtung unterstützt, und einer zweiten Position, in der er keine der Reibungseinrichtungen unterstützt, bewegbar ist. Dadurch ist es in der ersten Position möglich, dass die Überlastsicherung erst bei einer größeren Kraft in azimutaler Richtung auf die Armlehne wirkt, wohingegen sich die Armlehne in der zweiten Position des Sperrkörpers schon bei einer geringeren Krafteinwirkung in azimutaler Richtung bewegen läßt. Somit läßt sich der Sperrkörper zum Einstellen der gewünschten Position der Armlehne in seine zweite Position bringen und die Armlehne gegen eine geringe Krafteinwirkung in die gewünschte Position schwenken. In dieser Position der Armlehne wird der Sperrkörper mittels der Umschaltvorrichtung in seine erste Position bewegt, so daß der Grundkörper in dieser Position verweilt, solange keine große Kraft auf ihn einwirkt, beispielsweise durch Auftreten mit dem gesamten Körpergewicht. Wird diese Kraft erreicht, so bleibt die Armlehne durch die Überlastsicherung vor einer Beschädigung verschont.

Bei einer vorteilhaften Weiterbildung der Erfindung sind an erster und/oder zweiter Reibungseinrichtung Hebellaschen ausgebildet. Dadurch wird Material für die Reibungseinrichtung eingespart, wodurch die Materialkosten für die Armlehne sinken. Desweiteren ist es dadurch möglich, dass je nach der Stelle, an der der Sperrkörper die erste oder zweite Reibungseinrichtung in radialer Richtung unterstützt, auf Grund der unterschiedlichen Hebelarmlängen die Kraft variiert werden kann, bei der Grundkörper und Verriegelungs-körper aneinander vorbei rutschen. Kann dadurch der Sperrkörper in radialer Richtung ausgebildete Fortsätze aufweisen, die in der zweiten Position des Sperrkörpers in die durch die Unterbrechungen gebildeten Schlitze eingreifen können und in der ersten Position des Sperrkörpers die erste oder zweite Reibungseinrichtung so stark unterstützten, daß sie diese in radialer Richtung gegen die gegenüberliegende Reibungseinrichtung leicht verbiegen.

In einer Weiterbildung der Armlehne ist diese bei Überlastung mit einem Moment senkrecht zur Achse der Welle in Kraftwirkungsrichtung schwenkbar. Dadurch ist es bei einer hohen lateralen Kraft auf den Grundkörper der Armlehne möglich, beispielsweise beim Ein- oder Aussteigen in einen Gabelstapler, daß die Armlehne nicht beschädigt wird, sondern nur aus ihrer gewünschten Position in eine andere Position bewegt wird. Von dieser Position kann sie einfach wieder in ihre gewünschte Position zurückbewegt werden, da sie unterstützt von dem elastischen Element in ihre gewünschte Position zurückgezogen wird. In der gewünschten Position ist eine starre Verbindung zwischen dem Verbindungskörper und der feststehenden Welle auf Grund des formschlüssigen Sitzes gegeben. Dies bedeutet, daß das Anschlußteil in seiner gewünschten Position, in der es sich im Sitz der Welle befindet, als Verlängerung der Welle wirkt und sich der Grundkörper um diese Schwenken läßt. So kann er beispielsweise von einer waagerechten Position in eine senkrechte Position geschwenkt werden.

Eine weitere Ausgestaltung sieht eine Armlehne vor mit einem Grundkörper, der drehbar auf einem Verbindungskörper angeordnet ist, wobei der Verbindungskörper ein Anschlußteil aufweist, das formschlüssig in einen Sitz an einer feststehenden Welle einsetzbar ist, und sowohl am Verbindungskörper als auch am Sitz ein elastisches Element angreift, das den Verbindungskörper in den Sitz zieht.

An der Armlehne ist vorteilhaft eine Haltescheibe vorgesehen, so daß der Grundkörper unverlierbar auf der Welle bzw. dem Verbindungskörper anordenbar ist. Das elastische Element kann dabei an seinem wellenfernen Ende an der Haltescheibe festgelegt sein.

In einer Weiterbildung kann vorgesehen sein, dass das elastische Element in einem Durchgang des Verbindungskörpers verläuft, der parallel zur Achse der Welle ausgerichtet ist.

Das Anschlussteil der Armlehne ist bevorzugt als Vierkant ausgebildet und ist damit ein leicht zu fertigendes Bauteil.

Besonders bevorzugt ist das elastische Element als eine Schraubenfeder ausgebildet. Dies ist eine besonders einfache und preiswerte Art, die gleichzeitig auch sicher ist, eine elastische Verbindung zwischen dem Verbindungskörper und der feststehenden Welle zu erreichen.

Eine weitere vorteilhafte Weiterbildung der Erfindung sieht vor, daß die erste und zweite Reibungseinheit jeweils auf einer Zylindermantelfläche liegt. Dies ist eine besonders einfach herzustellende Form, die zu einer Senkung der Herstellungskosten führt. Außerdem kann so gewährleistet werden, daß die beiden Reibungseinrichtungen immer in Kontakt miteinander sind, egal welche Winkelstellung sie zueinander einnehmen. Daß sich die beiden Reibungseinrichtungen jeweils auf einer Zylindermantelfläche befinden, ist so zu verstehen, daß sie entgegengesetzt zueinander in radialer Richtung ausgebildet sind, damit sie miteinander in Kontakt sind, insbesondere miteinander in Eingriff stehen. Insbesondere ist die Außenfläche des ersten Reibungskörpers mit der Innenfläche des zweiten Reibungskörpers in Eingriff.

Eine weitere vorteilhafte Weiterbildung der Erfindung sieht vor, daß die erste und zweite Reibungseinrichtung an einander zugewandten Flächen jeweils als ein Rillenprofil, insbesondere als ein Zahnkranz, ausgebildet sind. Dadurch wird eine besonders gute Reibung zwischen ihnen gewährleistet, wobei insbesondere bei einer Ausbildung als Zahnkranz zusätzlich ein Formschluß erreicht wird, wodurch die Kraft, die zur Auslösung der Überlastsicherung nötig ist, stark erhöht wird, ohne daß die Unterstützung der Reibungseinrichtungen durch den Sperrkörper vergrößert werden muß.

In einer Weiterbildung ist vorgesehen, dass die Außenfläche des ersten Reibungskörpers mit der Innenfläche des zweiten Reibungskörpers in Eingriff ist.

Eine weitere vorteilhafte Weiterbildung der Erfindung sieht vor, daß der Sperrkörper zwei Sperrscheiben aufweist, die in jeweils einer Ausnehmung des Grundkörpers angeordnet sind und miteinander durch einen Durchbruch im Grundkörper verbunden sind. Zum einen kann damit der Effekt erzielt werden, daß die Reibung zwischen den beiden Reibungseinrichtungen erhöht wird, indem jeder der beiden Sperrscheiben jeweils ein Paar von Reibungseinrichtungen unterstützt. Außerdem ist es dadurch möglich, daß die Umschaltvorrichtung sowohl am wellennahen als auch am wellenfernen Ende angeordnet werden kann und somit auf individuelle Wünsche des Benutzers eingegangen werden kann. Außerdem ist man flexibler in der Ausgestaltung.

Eine weitere vorteilhafte Weiterbildung der Erfindung sieht vor, daß der Verriegelungskörper Festlegemittel aufweist, durch die er ortsfest zur Welle bzw. zum Verbindungskörper anordenbar ist. Diese sind insbesondere als Dome ausgestaltet, die durch damit korrespondierende Löcher in einer Befestigungsscheibe hindurchgreifen, die mit der Welle bzw. dem Verbindungskörper fest verbunden ist. Insbesondere ist die Befestigungsscheibe mit der Welle bzw. dem Verbindungskörper verschweißt sind. Dadurch ist es möglich, daß bei einem Verschleiß des Verriegelungskörpers dieser allein ausgewechselt werden kann, ohne daß auch noch die gesamte Welle bzw. der Verbindungskörper ausgetauscht werden muß. Somit ist eine preiswerte Reparatur gegeben, da nicht die Gesamtheit der vorgenannten Teile ausgewechselt werden muß.

In einer Weiterbildung der Armlehne ist vorgesehen, dass in axialer Richtung am Grundkörper eine erste Anschlagfläche und am Verriegelungskörper eine zweite Anschlagfläche ausgebildet ist, an denen sie aneinander stoßen. Die Verriegelungskörper bilden so jeweils einen Anschlag.

Eine weitere vorteilhafte Weiterbildung der Erfindung sieht vor, daß der Grundkörper der Armlehne zwischen einer waagerechten Position und einer senkrechten Position automatisch mittels einer Verschwenkvorrichtung bewegbar ist. Dadurch ist es möglich, daß während des Ein- und Aussteigens der Grundkörper der Armlehne aus der gefährdeten waagerechten Postition weggeschwenkt werden kann, so daß die Überlastsicherung nur noch in Ausnahmefällen eingreifen muß. Somit wird eine weitere Reduzierung von Beschädigungen der Armlehne erreicht. Insbesondere ist es vorteilhaft, wenn die Armlehne eine Positioniervorrichtung aufweist, durch die ihr Grundkörper in eine waagerechte Position bewegbar ist, wenn der ihm zugeordnete Sitz belastet ist und er in eine senkrechte Position bewegbar ist, wenn der Sitz nicht belastet ist. Damit wird eine Automatisierung der Bewegung von einer Position in die andere erreicht, wenn der Benutzer sich auf den Sitz mit der Armlehne setzen möchte oder sich von diesem erheben möchte.

Insbesondere ist es vorteilhaft, wenn der Grundkörper der Armlehne in seiner waagerechten Position mittels einer Arrettiervorrichtung verriegelbar ist. Dadurch kann erreicht werden, daß selbst wenn die Armlehne mit einer Positioniervorrichtung ausgestattet ist, der Grundkörper in seiner waagerechten Position bleibt, auch wenn der Benutzer des Sitzes, an dem die Armlehne angebracht ist, sich nur auf dem Sitz zurechtsetzen möchte und dabei kurz sein Gewicht von dessen Sitzfläche abhebt.

Des weiteren kann an dem wellenfernen Ende der Armlehne eine Abdeckkappe angeordnet sein. Diese schützt die beweglichen Teile vor Verschmutzung sowie Beschädigung.

Weitere Vorteile und Einzelheiten der Erfindung sind Gegenstand der anhand der Figuren im folgenden beschriebenen Ausführungsbeispiele. Es zeigen:
- Fig. 1: einen Querschnitt durch ein erstes erfindungsgemäßes Ausführungsbeispiel Armlehme mit azimutaler Überlastsicherung,
- Fig. 2: einen schematischen Ausschnitt des Ausführungsbeispiels von Fig. 1, wobei die Sperrscheibe in ihrer zweiten Position steht,
- Fig. 3: einen Ausschnitt wie in Fig. 2, wobei die Sperrscheibe jedoch in ihrer ersten Position steht, und
- Fig. 4: einen Querschnitt in der gleichen Ebene wie in Fig. 1 durch ein zweites Ausführungsbeispiel einer erfindungsgemäßen Armlehne mit lateraler Überlastsicherung.

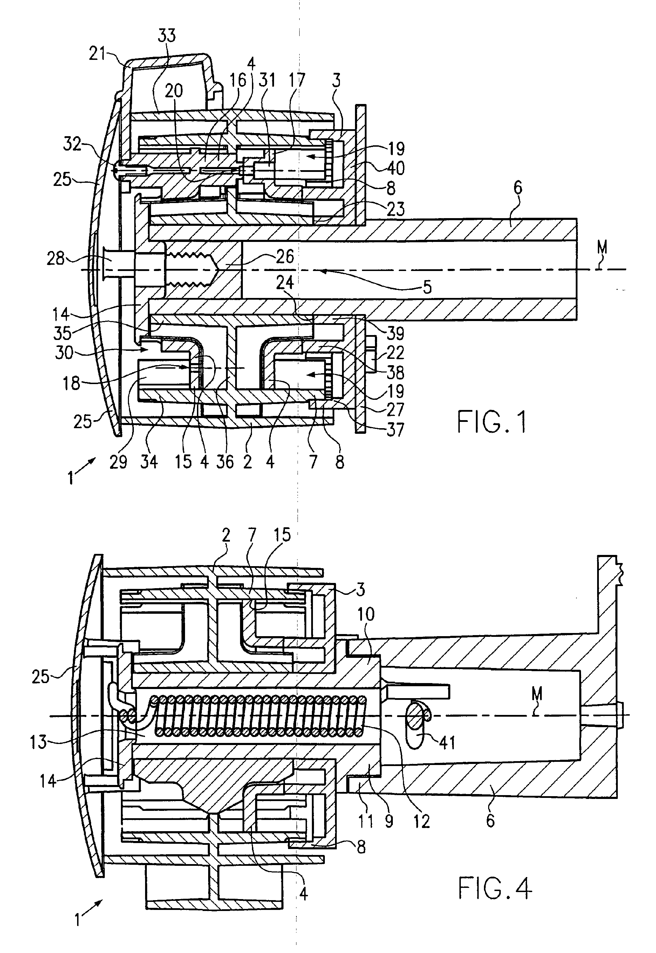

Fig. 1 zeigt eine Armlehne 1 mit einer feststehende Welle 6, die entlang ihrer Mittelachse M einen Durchgang 5 aufweist. Am freien Ende der Welle 6 wird der Durchgang 5 von einer Mutter 26 abgeschlossen. Die Mutter 26 kann beispielsweise einstückig mit der Welle 6 ausgebildet oder auch in diese eingeschweißt sein. In die Mutter 26 ist eine Schraube 28 eingedreht, die eine Haltescheibe 14 mit der feststehenden Welle 6 verbindet. Die Haltescheibe 14 steht in radialer Richtung über die feststehende Welle 6 hinaus. Auf der Welle 6 sind außerdem eine Befestigungsscheibe 27, ein Grundkörper 2, ein Verriegelungskörper 3 und ein Sperrkörper 4 angeordnet.

Die Befestigungsscheibe 27, die in radialer Richtung über die Welle 6 heraussteht, ist starr zur Welle 6 angeordnet. Dies ist im Ausführungsbeispiel dadurch erreicht, daß die Befestigungsscheibe 27 mit der Welle 6 verschweißt ist.

Zwischen der Befestigungsscheibe 27 und der Haltescheibe 14 ist ein Verriegelungskörper 3 angeordnet. Dieser weist in axialer Richtung herausstehende Dome 22 auf, die in zwei Löcher in der Befestigungsscheibe 27 eingreifen. Insbesondere sind zwei Dome 22 ausgebildet, die bezüglich der Mittelachse M symmetrisch angeordnet sind. Der Verriegelungskörper 3 weißt zentral eine Öffnung auf, die so groß ist, daß er gerade spielfrei auf die Welle 6 aufgeschoben werden kann. Der Verriegelungskörper 3 ist scheibenförmig bezüglich der Mittelachse M der Welle 6 ausgebildet und weißt drei zylindermantelförmige Erhebungen 37, 38, 39 auf, die von der Scheibe 40 parallel zur Mittelachse M der Welle 6 abstehen. Die innere der drei Erhebungen 39 weißt parallel zur Mittelachse M der Welle 6 Schlitze auf, so daß ein paßgenaues Anschmiegen an die Welle 6 möglich ist. Die äußere Erhebung 37 weißt an ihrer der Welle 6 zugewandten Fläche eine Reibungseinrichtung 8 auf. Diese Reibungseinrichtung 8 ist in Form eines Rillenprofils ausgebildet, dessen Rillen parallel zur Mittelachse M der Welle 6 verlaufen.

Zwischen dem Verriegelungskörper 3 und der Haltescheibe 14 ist ein Grundkörper 2 angeordnet, der einen zentralen Durchbruch aufweist. Der Grundkörper 2 weist eine zentral angeordnete Scheibe 36 auft, von der jeweils in entgegengesetzte Richtungen paarweise Erhebungen 33, 34, 35 abstehen. Das innere Paar der Erhebungen 35 bildet einen Kanal, der so groß ist, daß der Grundkörper 2 spielfrei auf die Welle 6 aufgeschoben werden kann. Das mittlere Paar der Erhebungen 34 ist als eine erste Reibungseinrichtung 7 ausgebildet, die auf einer Zylindermantelfläche liegt. Die erste Reibungseinrichtung 7 weist in axialer Richtung Schlitze 30 auf, so daß sie in Form von insgesamt neun Hebellaschen 29 ausgebildet ist. Sie weist an ihrer der Welle 6 entgegengesetzten Fläche ein Rippenprofil auf, das jenem der zweiten Reibungseinrichtung 8 entgegengesetzt ausgebildet ist. Außerdem sind die Durchmesser der beiden Reibungseinrichtungen 7, 8 so aufeinander abgestimmt, daß die Rippen der ersten Reibungseinrichtung 7 mit den Rippen der zweiten Reibungseinrichtung 8 kämmen. Die axiale Ausdehnung des Paares der inneren Erhebungen ist so groß, daß der Grundkörper 2 mit einer ersten Anschlagfläche 23 an einer zweiten Anschlagfläche 24 des Verriegelungskörpers 3 anschlägt, wobei Grundkörper 2 und Verriegelungskörper 3 zwischen Haltescheibe 14 und Befestigungsscheibe 27 in axialer Richtung spielfrei gehalten werden. In der Scheibe 36 des Grundkörpers 2 ist ein Durchbruch 20 ausgebildet. Dadurch werden Ausnehmungen 18, 19, die durch das mittlere und innere Paar von Erhöhungen 34, 35 gebildet werden, miteinander verbunden.

In den beiden Ausnehmungen 18, 19 sind zwei Sperrscheiben 16, 17 angeordnet, die zusammen einen Sperrkörper 4 bilden. Die beiden Sperrscheiben 16, 17 sind über eine erste Schraube 31, die durch den Durchbruch 20 im Grundkörper 2 greift, miteinander verbunden, so daß sie keine Relativbewegung zueinander ausführen können. Die einzelnen Sperrscheiben 16, 17 sind jeweils in axialer Richtung gesehen so ausgebildet, daß über ihren Rand in radialer Richtung Fortsätze 15 herausstehen. Die erste Sperrscheibe 16 ragt in axialer Richtung über den Grundkörper 2 heraus und ist an ihrem von der zweiten Sperrscheibe 17 entfernten Ende mittels einer zweiten Schraube 32 mit einer Umschaltvorrichtung 21 verbunden. Dem Wellenende gegenüberliegend wird die Mechanik durch eine Abdeckkappe 25 abgedeckt, die auf die Haltescheibe 14 aufgesteckt ist.

Mittels der Umschaltvorrichtung 21 kann der Sperrkörper 4 relativ zum Grundkörper 2 um die Mittelachse M der Welle 6 gedreht werden. Der Sperrkörper 4 nimmt dabei entweder eine erste Position ein, in der die Hebellaschen 29 durch die Fortsätze 15 unterstützt werden oder eine zweite Position, in der die Fortsätze 15 in die Schlitze 30 der ersten Reibungseinrichtung 7 eingreifen. In der zweiten Position berühren sich die Hebellaschen 29 der ersten Reibungseinrichtung 7 und die Sperrscheiben 17, 18 des Sperrkörpers 4 nicht, so daß keine Unterstützung der Hebellaschen 29 durch den Sperrkörper 4 gegeben ist. Wird der Sperrkörper 4 mittels der Umschaltvorrichtung 21 aus seiner zweiten Position verdreht, so verlassen die Fortsätze 15 die Schlitze 30 in der ersten Reibungseinrichtung 7 und bewegen sich in radialer Richtung zwischen die Welle 6 und die einzelnen Hebellaschen 29 bis die erste Position erreicht ist. Die Fortsätze 15 sind bevorzugt in ihrer axialen Ansicht rechteckig ausgebildet. Ebenso ist es möglich, diese sägezahnförmig auszubilden, so daß je nach Grad der Verdrehung des Sperrkörpers 4 die Unterstützung der Hebellaschen 29 zunimmt. Das Maximum der Unterstützung wird erreicht, wenn die Spitzen der Sägezähne aus den Schlitzen 30 hinter die Hebellaschen 29 gedreht wurden. Ebenfalls ist es denkbar, den Sperrkörper 4 so auszubilden, daß sich die Fortsätze 15 nicht in einer Ebene senkrecht zur Mittelachse M der Welle 6 erstrecken, sondern auf einer Schraubenlinie auf einem Zylindermantel um die Mittelachse M der Welle 6. Dadurch kann eine Unterstützung der einzelnen Hebellaschen 29 an verschiedenen Stellen erreicht werden, wodurch sich die Hebelarmlängen in axialer Richtung verändern.

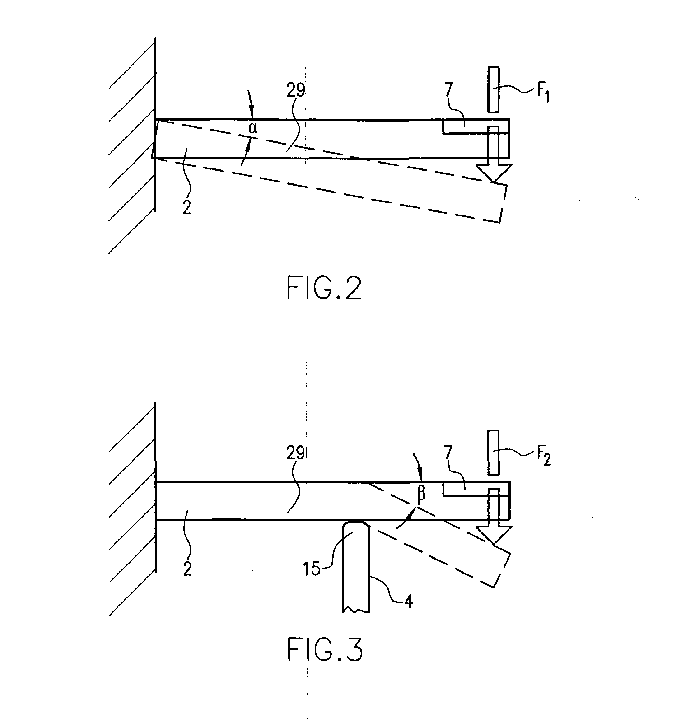

Das Prinzip, nach dem die Erfindung funktioniert, kann am besten im Zusammenhang mit den Figuren 2 und 3 erklärt werden. Die in Fig. 2 dargestellte Hebellasche 29 wird dort nicht von einer Sperrscheibe 4 unterstützt. Dies entspricht der oben beschriebenen zweiten Stellung der Sperrscheibe 4, in der die Fortsätze 15 in die Schlitze 30 zwischen den Hebellaschen 29 der ersten Reibungseinrichtung 7 eingreifen. In dieser zweiten Stellung ist durch geringen Kraftaufwand ein Verdrehen des Grundkörpers 2 gegen den Verriegelungskörpger 3 (nicht gezeigt) möglich. Damit sich diese beiden Körper gegeneinander verdrehen, ist es nötig, daß die beiden Rillenprofile der ersten und zweiten Reibungseinrichtung 7, 8 nicht mehr im Eingriff sind. Nachdem der Zahnkranz der zweiten Reibungseinrichtung 8 auf einer durchgängigen Zylindermantelfläche liegt, bleibt nur noch den Hebellaschen 29 des Grundkörpers 2 in radialer Richtung auszuweichen. Dies tritt bei einer azimutal auf den Grundkörper 2 wirkenden Kraft auf, bei der der Winkel α zwischen der unbelasteten Position der Hebellaschen 29 und der mit einer Kraft beaufschlagten Position der Hebellaschen 29 erreicht wird. Dann ist der Eingriff der beiden Reibungseinrichtungen 7, 8 nicht mehr gegeben. Dieser Zustand wird wegen des langen Hebelarmes schon durch eine geringe Kraft F₁ erreicht.

Dagegen unterstützt in Fig. 3 die Sperrscheibe 4 mit ihrem Fortsatz 15 die Hebellasche 29 der ersten Reibungseinrichtung 7. Der Weg, den das Ende der Hebellasche 29 zurücklegen muß, damit der Eingriff zwischen den Reibungseinrichtungen 7, 8 nicht mehr gegeben ist, hat sich hinsichtlich der in Fig. 2 gegebenen Konstellation nicht geändert. Durch die Unterstützung der Hebellasche 29 wird jedoch der Hebelarm kürzer, der sich jetzt nur noch vom Fortsatz 15 bis zum freien Ende der Hebellasche 29 erstreckt. Dadurch ergibt sich ein größerer Winkel β, bei dem die beiden Reibungseinrichtungen 7, 8 nicht mehr in Kontakt sind. Daraus resultiert zwangsläufig eine Erhöhung der Kraft F₂, die auf das freie Ende der Hebellasche 29 ausgeübt werden muß. Die Position des Fortsatzes 15 der Sperrscheibe 4 zur Unterstützung der ersten Reibungseinrichtung 7 in axialer Richtung ist so gewählt, daß bei einer normalen Beanspruchung des Grundkörpers 2, beispielsweise beim Aufstützen mit dem Arm, die Kraft nicht ausreicht, um den Eingriff zwischen den beiden Reibungseinrichtungen 7, 8 zu lösen. Wird dagegen die Kraft F₂ überschritten, so wird der Grundkörper 2 gegen den Verriegelungskörper 3 um die Mittelachse M der Welle 6 verdreht ohne daß eine Beschädigung der Armlehne 1 erfolgt. Es wird nämlich die Verzahnung zwischen erster und zweiter Reibungseinrichtung 7, 8 gelöst. Die Armlehne 1 kann somit auch nachdem eine sehr hohe Kraft auf sie eingewirkt hat weiter verwendet werden. Ein Zurückbewegen des Grundkörpers 2 der Armlehne 1 in die gewünschte Position erfolgt dadurch, daß die Umschaltvorrichtung 21 wieder in eine solche Position bewegt wird, daß die Sperrscheibe 4 die in Fig. 2 gezeigte zweite Position einnimmt und die erste Reibungseinrichtung 7 nicht unterstützt. Dadurch kann eine Verdrehung des Grundkörpers 2 gegen eine geringe Kraft F₁ erfolgen, wie dies oben beschrieben wurde. Ist die gewünschte Position des Grundkörpers 2 erreicht, so wird die Umschaltvorrichtung 21 wieder in ihre andere Position gebracht, so daß die Sperrscheibe 4 wieder in ihre in Fig. 3 gezeigte erste Position gedreht wird.

In Fig. 4 ist eine laterale Überlastsicherung für eine Armlehne 1 gezeigt. Eine feststehende Welle 6 weißt einen Sitz 11 auf, in den ein Verbindungskörper 9 formschlüssig eingreift. Mit dem Verbindungskörper 9 ist ein Verriegelungskörper 3 starr verbunden, so daß diese beiden Teile nicht gegeneinander verdreht werden können. Der Verriegelungskörper 3 ist im wesentlichen so aufgebaut, wie der in Fig. 1 beschriebene. Mit der zweiten Reibungseinrichtung 8 des Verriegelungskörpers 3 ist die erste Reibungseinrichtung 7 des Grundkörpers 2, dessen Aufbau in Fig. 1 beschrieben ist, in Eingriff. Der Grundkörper 2 ist dabei drehbar auf dem Verbindungskörper 9 angeordnet. Er wird in seiner axialen Positionierung zum einen durch den Verriegelungskörper 3 und zum anderen durch eine, wie zu Fig. 1 beschrieben, Haltescheibe 14 gehalten. Im Unterschied zur Fig. 1 wird die Haltescheibe 14 nicht mittels einer Schraube 28 starr mit der Welle 6 verbunden, sondern mittels eines elastischen Elements 12 in Form einer Schraubenfeder. Die Schraubenfeder ist durch einen Durchgang 13 im Verbindungskörper 9 geführt. Sie ist an ihrem einen Ende mit der Haltescheibe 14 und an ihrem anderen Ende mit der Welle 6 fest verbunden. Dazu ist in einer Ausnehmung der Welle 6 ein Zapfen 41 ausgebildet. Die Mechanik am wellenfernen Ende der Armlehne 1 wird, wie in Fig. 1, durch eine Abdeckkappe 25 abgedeckt, die auf die Haltescheibe 14 aufgedrückt ist.

Der Sitz 11 an der Welle 6 ist als Vierkant ausgebildet. In ihn greift ein Anschlußteil 10 des Verbindungskörpers 9 formschlüssig ein.

Die laterale Überlastsicherung arbeitet so, daß bei einer Kraft, die in axialer Richtung der Welle 6 auf den Grundkörper 2 ausgeübt wird, dieser mitsamt dem Verbindungskörper 9 aus dem Sitz 11 der Welle 6 entgegen der Federkraft des elastischen Elements 12 herausgedreht wird. Läßt diese Kraft nach, so bewegt sich der Verbindungskörper 9 mit seinem Anschlußteil 10 aufgrund der Federkraft wieder auf den Sitz 11 zu und rastet darin automatisch ein, sobald die Kraft unter ein vorgegebenes Minimum fällt. Es ist auch möglich, die Überlastsicherung so auszubilden, daß es stationäre Positionen gibt, bei denen sich das Verbindungsteil 9 außerhalb des Sitzes 11 befindet, wie dies bei Seitenspiegeln von Automobilen bekannt ist. Dabei rastet der Grundkörper 2 mit dem Verbindungsteil 9 mittels eines bekannten, nicht näher beschriebenen Mechanismuses in diesen Positionen ein. Ein Zurückbewegen des Grundkörpers 2 in den Sitz 11 der Welle 6 erfolgt dadurch, daß die Einrastposition durch leichten Druck überwunden wird und der Grundkörper 2 sich dann, wie oben beschrieben, automatisch in die normale Position zurückbewegt.

Es versteht sich von selbst, daß es möglich ist, eine in Fig. 1 beschriebene azimutale Überlastsicherung mit einer in Fig. 4 dargestellten lateralen Überlastsicherung zu kombinieren. Dadurch wird das offene Ende der Welle 6 aus Fig. 1 durch einen Verbindungskörper 9 aus Fig. 4 ersetzt. Desweiteren wird anstatt der Schraube 28 in Fig. 1 die Haltescheibe 14 mittels eines elastischen Elements 12 mit der Welle 6 verbunden.

### BEZUGSZEICHENLISTE

- 1: Armlehne
- 2: Grundkörper
- 3: Verriegelungskörper
- 4: Sperrkörper
- 5: Duchgang
- 6: Welle
- 7: Erste Reibungseinrichtung
- 8: Zweite Reibungseinrichtung
- 9: Verbindungskörper
- 10: Anschlußteil
- 11: Sitz
- 12: Elastisches Element
- 13: Durchgang
- 14: Haltescheibe
- 15: Fortsatz
- 16: Erste Sperrscheibe
- 17: Zweite Sperrscheibe
- 18: Erste Ausnehmung
- 19: Zweite Ausnehmung
- 20: Durchbruch
- 21: Umschaltvorrichtung
- 22: Festlegemittel
- 23: Erste Anschlagfläche
- 24: Zweite Anschlagfläche
- 25: Abdeckkappe
- 26: Mutter
- 27: Befestigungsscheibe
- 28: Schraube
- 29: Hebellaschen
- 30: Schlitz
- 31: Erste Schraube
- 32: Zweite Schraube
- 33: Äußere Erhebung des Grundkörpers
- 34: Mittlere Erhebung des Grundkörpers
- 35: Innere Erhebung des Grundkörpers
- 36: Scheibe des Grundkörpers
- 37: Äußere Erhebung des Verriegelungskörpers
- 38: Mittlere Erhebung des Verriegelungskörpers
- 39: Innere Erhebung des Verriegelungskörpers
- 40: Scheibe des Verriegelungskörpers
- 41: Zapfen
- F₁, F₂: Kräfte
- M: Mittelachse
- α, β: Winkel

## Patentansprüche

1. Armlehne (1) mit Überlastsicherung, insbesondere für einen Gabelstaplersitz, mit einem mit der Armlehne (1) fest verbundenen Grundkörper (2), einem fest dem Sitz zugeordneten Verriegelungskörper (3) und einem Sperrkörper (4), wobei Grundkörper (2), Verriegelungskörper (3) und Sperrkörper (4) konzentrisch um eine fest am Sitz montierte Welle (6) angeordnet sind, der Grundkörper (2) eine erste Reibungseinrichtung (7) und der Verriegelungskörper (3) eine zweite Reibungseinrichtung (8) aufweist, die beiden Reibungseinrichtungen (7, 8) konzentrisch zur Welle (6) in radialer Richtung in Kontakt sind und der Sperrkörper (4) eine der beiden Reibungseinrichtungen (7, 8) so in radialer Richtung unterstützt, dass bei Überlast die beiden Reibungseinrichtungen (7, 8) gegeneinander verdrehbar sind.

2. Armlehne nach Anspruch 1, bei der der Sperrkörper (4) mittels einer Umschaltvorrichtung (21) zwischen einer ersten Position, in der er die erste oder zweite Reibungseinrichtung (7, 8) unterstützt, und einer zweiten Position, in der er keine der Reibungseinrichtungen (7, 8) unterstützt, bewegbar ist.

3. Armlehne nach einem der Ansprüche 1 oder 2, wobei die Armlehne bei Überlastung mit einem Moment senkrecht zur Achse der Welle (6) in Kraftwirkungsrichtung schwenkbar ist.

4. Armlehne nach einem der Ansprüche 1 bis 3 mit einem Grundkörper (2), der drehbar auf einem Verbindungskörper (9) angeordnet ist, wobei der Verbindungskörper (9) ein Anschlußteil (10) aufweist, das formschlüssig in einen Sitz (11) an einer feststehenden Welle (6) einsetzbar ist, und sowohl am Verbindungskörper (9) als auch am Sitz (11) ein elastisches Element (12) angreift, das den Verbindungskörper (9) in den Sitz (11) zieht.

5. Armlehne (1) nach einem der vorstehenden Ansprüche, bei der die erste und zweite Reibungseinrichtung (7, 8) an einander zugewandten Flächen jeweils als ein Rillenprofil, insbesondere als ein Zahnkranz, ausgebildet sind.

6. Armlehne (1) nach einem der vorstehenden Ansprüche, bei der der Sperrkörper (4) in radialer Richtung Fortsätze (15) aufweist, die erste oder zweite Reibungseinrichtung (7, 8) unterstützen.

7. Armlehne (1) nach einem der vorstehenden Ansprüche, bei der der Sperrkörper (4) zwei Sperrscheiben (16, 17) aufweist, die in jeweils einer Ausnehmung (18, 19) des Grundkörpers (2) angeordnet sind und miteinander durch einen Durchbruch (20) im Grundkörper (2) verbunden sind.

8. Armlehne (1) nach einem der vorstehenden Ansprüche, bei der der Grundkörper (2) zwischen einer waagerechten Position und einer senkrechten Position automatisch mittels einer Positioniervorrichtung bewegbar ist.

9. Armlehne (1) nach Anspruch 8, bei der der Grundkörper (2) durch die Postioniervorrichtung in eine waagrechte Position bewegbar ist, wenn der der Armlehne (1) zugeordnete Sitz belastet ist, und der Grundkörper (2) in eine senkrechte Position bewegbar ist, wenn der Sitz nicht belastet ist.

10. Armlehne (1) nach Anspruch 8 oder 9, bei der der Grundkörper (2) in seiner waagerechten Position mittels einer Arretiervorrichtung verriegelbar ist.
